Europäisches Patentamt

European Patent Office    (11) Publication number:    **0 178 688**

Office européen des brevets    **A2**

# (12) EUROPEAN PATENT APPLICATION

(21) Application number: **85115872.5**

(22) Date of filing: **17.10.84**

(51) Int. Cl.⁴: **C 04 B 35/00**
F 24 D 1/00, B 05 B 7/06
F 23 M 5/00, C 04 B 28/34
//(C04B28/34, 14:38)

(30) Priority: **17.10.83 US 542272**
**12.10.84 US 660190**
**12.10.84 US 660206**
**12.10.84 US 660207**

(43) Date of publication of application:
**23.04.86 Bulletin 86/17**

(84) Designated Contracting States:
**AT BE CH DE FR GB IT LI LU NL SE**

(60) Publication number of the earlier application
in accordance with Art. 76 EPC: **0 142 715**

(71) Applicant: **MANVILLE SERVICE CORPORATION**
**Ken-Caryl Ranch**
**Denver Colorado 80217(US)**

(72) Inventor: **Smith, William Hahn**
**163 Orchard Drive**
**McMurray Pennsylvania 15317(US)**

(74) Representative: **Grättinger, Günter**
**Wittelsbacherstrasse 5 Postfach 16 49**
**D-8130 Starnberg(DE)**

(54) Refractory binder and method for making it.

(57) A refractory binder comprises a suspension of colloidal particles the oxide of which will not act as a fluxing agent to alumina silica fibers at temperatures above 815.5°C, and a tackifying agent in intiminate admixture with the said suspension. This binder is made by reacting a colloidal suspension of particles selected among the group consisting of alumina, silica or zirconia with a tackifying agent. The binder may be applied to a refractory material comprising a plurality of refractory fibers.

EP 0 178 688 A2

Croydon Printing Company Ltd.

Divisional Application "B"
of EP 84 112 530.5

Refractory binder and method for making it

The invention relates to a refractory binder and
a method for making it.

In the past, high temperature resistant fibrous material has been applied to heated surfaces, such
as heat treating furnaces and kilns, by attaching
batts or strips containing such fibers to the heated
surface. This method requires mechanical anchoring
or fastening means to attach the strips to the heated
surface. Such mechanical attachment is expensive
in that it requires large amounts of labor and fastening materials to attach the strips. In addition,
because this method is time consuming, it requires
the furnace or kiln to be out of service for extended periods of time. Finally, gaps between adjoining
strips may occur either during the attachment process
or later due to thermal shrinkage which allows heat
leakage between the layers of fiber.

Improvements to this method of attaching refractory
fiber linings to the wall of kilns and furnaces have
been made such as is described in U.S. Patent No.
4,381,634. This method involving the mechanical attachment of modules, overcomes many of the problems

- 2 -

associated with layered linings especially the opening of gaps between the edges of layers due to heat shrinkage at elevated temperatures. However, like the above method, the use of modules requires mechanical attachment to the metal shells of furnaces which again require considerable cost in labor. The use of modules has also been found to be of value in relining old dense refractory linings such as refractory brick. In this case the folded or pleated modules are glued to the old monolithic of brick lining by use of a refractory mortar of glue which is generally of the hydraulic setting nature. This method of relining of kilns is labor intensive requiring the application of mortar to the brick work and then quickly applying the folded modules thereon. This method requires that time be given for the setting of the hydraulic mortar before the newly lined kiln can be fired.

All the above methods have one feature in common which is that they present an unbonded refractory fiber lining to the interior of the kiln. As time goes by these fibers devitrify (crystallize) and in so doing lose some of their mechanical strength

- 3 -

making them more susceptible to mechanical abrasion
and destruction due to high velocity gases from the
heating mechanisms of the kilns.

High temperature resistant binder powders have been
mixed with water and sprayed with refractory fibers.
Such methods typically employ calcium alumina cements
which are very alkaline and will settle when in suspension. It is also difficult to achieve homogenous
mixing of fiber and binder with such a system. A
hydraulic bond must be achieved prior to drying of
the cement otherwise bonding of the fibers will not
occur. In addition, careful drying of the sprayed
mixture must be undertaken in order to prevent violent
spalling.

Other methods for spraying insulation have been employed in the past utilizing organic binders. For
example, U.S. patent 2,929,436 discloses a method
and apparatus for spraying a mixture of fibers and
resin material. As indicative of prior methods of
application , this publication discloses mixing fiber
and resin in a nozzle and spraying the mixture onto
a surface. However, while suited for its intended
purpose, such method and apparatus, if used in the spraying of refractory fiber with a tacky inorganic
binder, would cause clogging of the nozzle. In
addition, incomplete coating of the refractory fibers
could cause a weakened layer of fibers which in turn
could cause failure of the insulating layer at high
temperatures. Because of the temperatures to which
refractory fibers are subjected, often 1093.3°C
(2.000°F) or more, such failures could be dangerous
to workers in such industries as the steel industry
and could cause extensive damage to furnaces and
kilns. Thus, the intimate admixture of refractory
fiber and the tacky inorganic binder to form a monolithic layer is important to the safe and efficient
operation of such furnaces and kilns.

Prior art binders for bonding refractory fibers have
included a variety of compounds including colloidal
silica and phosphoric acid (actually $P_2O_5$ which may
be derived from $H_3PO_4$ under appropriate temperature
conditions). While these binder systems are useful
in certain applications, they are not without rela-
tive disadvantages.

- 5 -

For example, prior art phosphoric acid binders do
not adhere well to refractory fibers. Binders including colloidal silica are subject to irreversible
precipitation of the silica if the binder has been
subjected to freezing temperatures.

A very serious disadvantage with prior art binder
systems is binder migration. That is, as the binders
are cured, the binder migrates to the surface of
the material producing a material with a very soft
interior. This cause integrity problems with the
resulting material. The material is thus not suitable
for use in applications requiring a monolithic structure. In addition, prior binder systems employing
colloidal supensions such as colloidal silica or
alumina must be cured very carefully. That is, because of binder migration, the colloidal sol must
be allowed to gel prior to curing. Failure to do
so results in migration of the binder particles from
the interior to the surface of the insulation layer.
In addition, prior art binders must be sprayed onto
a cool surface thus necessitating realtively long
cooling periods before a furnace can be insulated.

Another disadvantage of prior art binders has been
that they are not nearly as temperature resistant
as the refractory fibers themselves. Thus, high temperature applications of the fiber-binder mix are
limited by the properties of the binder rather than·
the fiber. For example, an insulation product made
from refractory fibers which are themselves temperature resistant up to 1426.67°C (2600°F) may only
be applied in temperature environments up to 1093.3°C
(2000°F) if the binder used in that product is only
effective up to 1093.3°F (2000°F). Any reaction of
the binder and fiber which tends to flux the fiber
composition causes increased fiber shrinkage. Thus,
the use temperature of the fiber - binder system
is limited to a temperature less than the use temperature of the fibers alone.

Other practical problems encountered with the use
of prior binder systems is that they are expensive,
there may be safety and environmental problems in
their applications, they may lack good suspension
properties, and finally, as with prior phosphoric
acid binders, the binders do not possess the tackiness or adhesiveness properties which are desirable
in many applications. In applications where it is

- 7 -

desirable to spray the refractory fiber onto a surface such as a furnace wall, it is essential that
the binder be sufficiently tacky to cause the fibers
to adhere to one another and to the surface.

The present invention combines an inorganic binder
matrix with temperature resistant clays. The tacky
nature of the binder renders it suitable for a wide
variety of applications. The resulting binder of
the present invention is temperature resistant to
at least 3000°F which allows its use with high temperature refractory fibers. As used herein, refractory fibers are defined as inorganic amorphous or
crystalline fibers which are not adversely affected
by temperatures in excess of 815.5°C (1500°F). An
example of such fibers is alumina-silica fibers.
However, as is known in the art, fibers including
zirconia, chromium, calcium, magnesium and the like
may be utilized. The binder disclosed herein could
also be employed with metal oxides to provide an
insulating layer of such material.

In addition, the binder system of the present invention greatly reduces or eliminates binder migration
which occurs in prior art binders.

- 8 -

The binder includes a tackifying agent. The preferred tackifying agents are temperature resistant clays such as montmorillonite clays. The most preferred clay is western bentonite clay. A fluxing agent may also be added to the binder in small quantities to increase the strength of the binder to fiber bonds at elevated temperatures.

Colloidal suspensions such as colloidal silica, colloidal alumina, and colloidal zirconia may be combined with the tackifying agents disclosed herein to produce a suitable binder. When the disclosed tackifying agents are combined with these colloidal suspenions the severe binder migration problems associated with colloidal binders such as colloidal silica are overcome. The addition of the tackifying agent imparts good suspension characteristics to the binder. Additionally , the preferred binder of the present invention may be sprayed directly onto hot surfaces thus eliminating long delays in insulating furnaces requiring complete cool down. Finally, the novel binder claimed herein reduces shrinkage of the coated fibers thus improving their refractory characteristics.
Because shrinkage is minimized, failure of the insulation layer due to cracks in the layer is reduced.
Prior art binders, especially colloidal silica binders without the tackifying agent disclosed herein required gelling of the colloidal silica. Otherwise serious binder migration to the surface of the insulation layer would occur.

In accordance with the present invention, the binder system may comprise chromium aluminum phosphate and a suitable tackifying agent. The chromium aluminum phosphate compound may be characterized by the following generalized formular: $Al_2O_3.3P_2O_5.xCr_2O_3$ wherein x ranges from about 0.1 to 10.

The term "tackifying agent", as used with respect to the present invention , is meant to define those substances which impart tackiness or adhesive properties to the binder system of the present invention.
Generally , such tackifying agents will be inorganic in nature. High temperature resistant clays, especially montmorillonite clays (preferably the western bentonite variety) have been found to be useful in the present invention.

Sodium and calcium based clays such as southern bentonite may also be used as a tackifying agent. Whatever
tackifying agent is used should, of course, be compatible with the overall binder system and its intended
use with regard to both chemical and physical properties. It is especially important that the tackifier,
in the quantity used, not produce fluxing of the
binder-fiber system at elevated temperatures.

In accordance with the present invention, the binder
formulation includes colloidal silica combined with
a tackifying agent. Preferably NALCO 1115 Colloidal
Silica of the 4 millimicron size Sol containing 15%
solids is used. Approximately 18.14 kilogram (40
lbs) of this colloidal silica was mixed with 0.567
kilogram (1.25 pounds) of western bentonite to form
a tacky binder.

The addition of a montmorillonite clay such as western
bentonite to the binder matrix has been found to
produce a tacky binder which adheres to virtually
any surface. While Western Bentonite is preferred,
any of the clays selected from the Montmorillonite
types of clay minerals have been found to be suitable
tackifying agents.

- 11 -

The binder of the present invention may be advantageously employed with refractory fibers in a spray-on
process. That is, refractory fibers may be directed
from a spray gun while at the same time being coated
with the binder of the present invention. Such application of refractory fiber and binder has been found
to raise the operating temperature of the refractory
fibers above their normal rated temperature. For
application of refractory fiber to a surface such
as a furnace wall, the binder is diluted, preferably
with water, in a 4.5 to 1 water to binder ratio by
volume. This ratio may range from 2 to 1 to 15 to
1 by volume. The diluted binder is preferably stirred in the dilution container to ensure a homo- genous
mixture during the spraying process. The diluted
binder may be sprayed with the fiber onto a surface
in a ratio which depends upon binder dilution. For
the preferred chromium aluminum phosphate binder
disclosed above, a ratio of 0.794 kilogram (1,75
lbs.) of fiber to 0.454 kilogram (1.0 lb) binder
is preferred.

- 12 -

Examples of different binder formulations and concentrations are listed below:

Binder #1 was a mixture of NALCO AG 1115 colloidal silica marketed by NALCO Chemical Corp. of 4 millimicron size particles containing 15% solids. 18.14 kilogram (forty pounds) of this solution was mixed with 0.567 kilogram (1.25 lbs) of western bentonite. The resulting binder was spayed in a 30% binder 70% alumina-silica-zirconia fiber ratio by weight and cured at 537.78°C (1000°F). A 192.2 kgm$^3$ (12 lb/ft$^3$) composite material resulted having good integrity.

Binder #2 was a mixture of the chromium aluminum phosphate binder matrix with bentonite clay and boric acid in the most preferred formulation previously disclosed. This binder concentrate was diluted 4 to 1 by volume with water and sprayed with alumina-silica-zirconia fiber in a ratio of 14% binder to 86% fiber by weight. This composite was then cured at 537.78°C (1000°F) and produced a 192.2 kg/m$^3$ (12 lb/ft$^3$) material.

- 13 -

Binder #3 was a mixture of 0.23 kilogram (1/2 lb.) colloidal alumina, 0.91 kilogram (2 lbs.) of -325 mesh $Al_2O_3$ particles and 0.567 kilogram (1 1/4 lbs.) bentonite in 18.144 kilogram (40 lbs.) of water. This binder concentrate was sprayed with alumina-silica-zirconia fibers in a ratio of 40% binder to 60% fiber. The resulting material was cured at 537.78°C (1000°F) and produced a material which did not adhere well to the brick substrate and did not produce material or sufficient integrity to allow density to be accurately measured.

Binder #4 was a mixture of 4.99 kilogram (11 lbs.) of Kaolin Clay, 0.34 kilogram (3/4 lbs.) western bentonite and 13.6 kilogram (30 lbs.) of water. This binder mixture was too viscous to be sprayed.

Binder #5 was a mixture of the chromium aluminum phosphate binder matrix with bentonite clay and boric acid in the most preferred formulation previously disclosed. This binder concentrate was diluted 10 to 1 by volume with water and sprayed in equal amounts by weight with alumina-silica-zirconia fiber.

- 14 -

The resulting material was cured at $537.78°C$ ($1000°F$)
and produced a material of 240.28 kg/m$^3$ (15 lb/ft$^3$)
density.

Binder #6 was a mixture of the chromium aluminum
phosphate binder matrix with the bentonite clay and
boric acid in the most preferred formulation previously disclosed . This binder concentrate was diluted 15 to 1 by volume with water and sprayed in a
ratio of 45% binder to 55% alumina-silica-zirconia
fiber by weight. The resulting material was cured
at room temperature and produced a material of 208.24
kg/m$^3$ (13 lbs/ft$^3$) density.

Binder #7 was a mixture of the chromium aluminum
phosphate binder matrix with bentonite clay and boric
acid in the most preferred formulation previously
disclosed. This binder was diluted 15 to 1 by volume
with water and sprayed in a ratio of 36% binder to
64% alumina-silica-zirconia fiber by weight. The
resulting material was cured at $537.78°C$ ($1000°F$)
but did not produce a material of sufficient integrity to obtain a density measurement.

Binder #8 was the colloidal silica binder disclosed
as binder #1 without the bentonite clay. The binder
was sprayed in a 60% binder to 40% fiber ratio by
weight with alumina-silica-zirconia fibers. The resulting material was cured at 537.78°C (1000°F) but
did not produce a material of sufficient integrity
to obtain a density measurement due to binder migration.

Binder #9 was a mixture of bentonite clay and water
in a ratio by weight of 10% bentonite to 90% water.
This binder did not bond with the alumina-silica
zirconia fiber.

A comparison of characteristics of the binder formu-
lations is given below:

|  | Binder Tacky | Integrity with Fibers after Curing | Binder Migration |
| --- | --- | --- | --- |
| Binder #1 | Yes | Good | Some |
| Binder #2 | Yes | Fair | Very little |
| Binder #3 | Yes | Fair | Some |
| Binder #4 | Yes | Unknown | Unknown |
| Binder #5 | Yes | Exellent | Very little |
| Binder #6 | Yes | Exellent | Very little |
| Binder #7 | Yes | Fair | Unknown |
| Binder #8 | No | Poor | Very heavy |
| Binder #9 | Yes | None | Unknown |

- 16 -

A comparison of shrinkage between the materials of binders #1, 2, 3, 5, and 6 was made with each other and with the fiber alone. After being exposed to a temperature of 1315.5°C (2400°F) for four hours the binder - fiber composites exhibited the following shrinkage characteristics:

|  | Shrinkage (%) |
|---|---|
| Binder #1 | 2.6 |
| Binder #2 | 1.5 |
| Binder #3 | 1.6 |
| Binder #4 | 1.6 |
| Binder #5 | 1.4 |
| Fiber alone | 2.0 |

From the above it can be seen that composites formed from the most preferred binder concentrate formulation of binder #2, 5 and 6 exhibited less shrinkage than the fiber alone. While binder #3 exhibited low shrinkage, the specific binder formulation exhibited only fair bonding characteristics.

A comparison of curing temperatures was made for binder #5. That is, the material made under binder formulation #5 was cured at 121.1°C (250°F), 176,67°C (350°F) and 232.2°C (450°F).

Each material was then placed in a 90% humidity chamber for 72 hours with the following results: the material cured at 121,1°C (250°F) received 31% added moisture and was wet and soft suggesting incomplete curing; the material cured at 176.67°C (350°F) received 18% added moisture and was somewhat wet and soft, but was marginally acceptable; and the material cured at 232,2°C (450°F) received 13% added moisture and was hard and held its integrity. Thus the curing temperature has a lower limit of about 176.67°C (350°F) with a preferred curing 232.2°C (450°F) or more.

In order to determine the preferred limits of dilution and binder to fiber ratio for the most preferred chromium aluminum phophate binder, the formulations of binder #2, 5, 6 and 7 were tested. The fiber-binder composite materials were compared with respect to the weight ratio of the original binder concentrate to fiber weight ratios in light of the integrity observed in the resulting material. The ratio of the weight of binder concentrate to fiber was 4.86% for binder #2; 14,52% for binder #5; 8.33 % for binder #6; and 5.72% for binder #7. The materials produced by binders #5 and 6 had exellent integrity while the material from binders #2 and 7 had fair integrity. This suggests that the preferred binder

- 18 -

concentrate to fiber weight ratio should be at least
6%. Thus, the binder dilution and diluted binder
to fiber weight ratio should be adjusted accordingly.

Various diluents may be used as the carrier for the
binder concentrate. While chromium aluminum phosphate
with bentonite clay has been disclosed as the preferred binder, other binders employing a temperature
resistant clay such as montmorillonite, or plastic
ball clays containing montmorillonite clay in quantities sufficient to ensure a tacky inorganic binder,
may be employed. In addition, the spraying of a binder with particulate matter such as various metallic
oxides could be employed to provide a particularly
heat resistant surface over a sprayed fiber-binder
layer.

Divisional Application "B"
of EP 84 112 530.5

Claims 1-8

1. A refractory binder comprising:
   a suspension of colloidal particles the oxide
   of which will not act as a fluxing agent to alumina silica fibers at temperatures above 815.5°C
   (1500°F); and
   a tackifying agent in intimate admixture with
   the said suspension.

2. Binder according to claim 1 wherein said colloidal
   suspension particles are selected from a group
   consisting of alumina, silica, or zirconia.

3. Binder according to claim 1 wherein said tackifying agent includes a montmorillonite clay.

4. Method for making a refractory binder comprising
   the step of reacting a colloidal suspension of
   particles selected from among the group consisting
   of alumina, silica or zirconia with a tackifying
   agent.

- 2 -

5. Method according to claim 4 wherein said tackifying agent is montmorillonite clay.

6. A refractory material comprising:
   a plurality of refractory fibers; and
   a binder including:
   a suspension of colloidal particles the oxide
   of which will not act as a fluxing agent to said
   refractory fibers at temperatures above 815.5°C
   (1500°F);
   and
   a tackifying agent in intimate admixture with
   said suspension.

7. Material according to claim 6 wherein said collo-
   dal suspension particles are selected from a group
   consisting of alumina, silica, or zirconia.

8. Material according to claim 6 wherein said tackifying agent includes montmorillonite clay.